# EUROPEAN PATENT APPLICATION

(11) **EP 1 553 676 A1**
(43) Date of publication of application: **13.07.2005**
(21) Application number: 04290064.7
(22) Date of filing: 09.01.2004
(51) Int. Cl.: H02H 3/24, G06F 1/30

(54) **An electronic protection device**

(71) Applicant: STMicroelectronics S.A., 92120 Montrouge (FR); STMicroelectronics Pvt. Ltd, Noida 201 301, Uttar Pradesh (IN)
(72) Inventor: Shah, Hitesh, 92593 Levallois Perret Cedex (FR); Charvet, Pierre, 92593 Levallois Perret Cedex (FR)
(74) Representative: Bentz, Jean-Paul

(57) **Abstract**

This invention relates to an electronic protection device.

According to the invention, this protection device disables the output from a digital circuit whenever an input signal is below a threshold voltage level and comprises :
- a threshold voltage detector, and
- a gating means for enabling/disabling the output from the digital circuit, having its control input connected to the output of the threshold voltage detector.

## Description

### FIELD OF INVENTION:

The invention relates to an electronic protection device.

### BACKGROUND OF THE INVENTION:

Many digital electronic circuit malfunction when the power supply is below a threshold value. The malfunction can result damage to the electronic and/or load. Similar malfunction can also occur when other slowly changing signals are below or above a defined level. It is therefore necessary to incorporate special protection devices or circuitry that disables the output from the digital circuits during period when the slowly changing signal is at an invalid level.

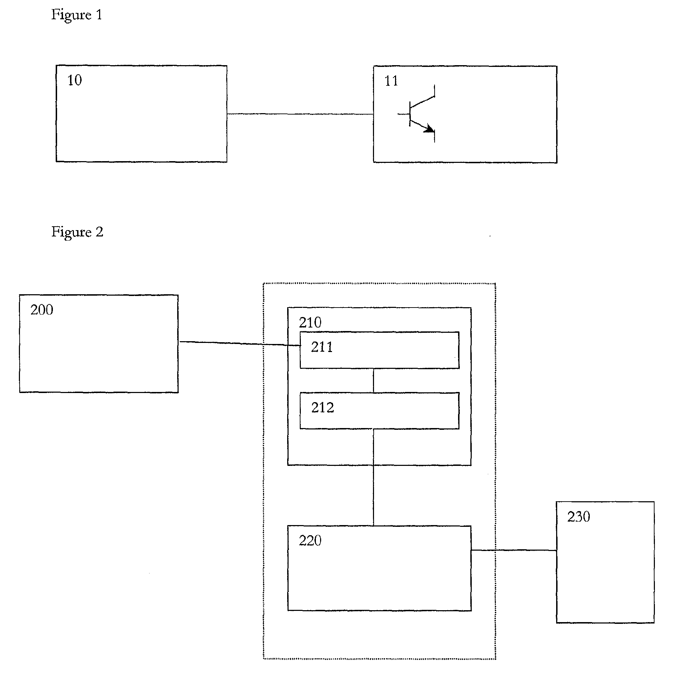

**Figure 1** illustrates one example of electronic circuit that may suffer potential damage on slowly changing power supply. Block **10** is the digital circuitry that drives a transistor **11**. The transistor is biased by a biasing supply V_{CC}. When the V_{CC} supply transits between 0.8 to 1.5 volts, while the output supply is present a reverse current flows from the collector to the driving circuitry through the base of the transistor this current can cause damage to the driving circuitry and/or port pins toggling, therefore is not desirable.

Another example relates to general-purpose micro controllers such as the product sold under the name "ST7" by the Applicant and which is operated from a supply voltage of 5V. When the power is switched on the voltage supply typically takes milliseconds to reach the final value. The LVD (low voltage detector) feature on the ST7 is intended to keep all the I/O lines at RESET level until V_{DD} reaches V_{DDmin} (typically 3.8 volts). However, when the supply voltage is in the 0.8 to 1.5 volts range, LVD loses its control on the I/O lines causing them to toggle. This undesired toggling can result in severe problems in power applications, such as when the I/O port drives the BJT/MOSFET.

Safety approaches using relays with fuses and LVD etc. are available. However, they do not provide adequate or reliable. Further, as discussed in the example, for a period during which the LVD loses control, there is no way to protect it.

Therefore, it is observed that there is a need to develop a device that overcomes the above-discussed problem and provides a reliable protection.

### OBJECT AND SUMMARY OF THE INVENTION:

Object of the invention is to provide a method and device to obviate the drawbacks from the prior art and provide reliable protection of digital circuits with respect to changing voltage level.

To achieve the said objective, this invention provides an electronic protection device that disables the output from a digital circuit whenever an input signal is below a threshold voltage level, comprising:
- a threshold voltage detector, and
- a gating means for enabling/disabling the output from the digital circuit, having its control input connected to the output of the threshold voltage detector.

The said threshold voltage detector comprises a plurality of diodes connected in series.

The said gating means is a controlled switch.

The said threshold voltage sensor is a zener diode or micro controller.

The said digital circuit is a microcontroller.

The said microcontroller includes a mechanism for delaying the digital output for a predefined period after the input signal has attained the defined threshold level.

The said mechanism is a software means.

The instant invention also provides a method for disabling the output from a digital circuit whenever an input signal is below a threshold voltage level, comprising the steps of:
- checking whether the input signal is below a defined threshold voltage, and
- gating the output from the digital circuit, based on the output of the threshold voltage detection.
The threshold voltage is checked using a plurality of series connected diodes.

The gating is implementing using standard logic gates.

The above method further includes the step of delaying the digital output for a predefined period after the input signal has attained the defined threshold level.

### BRIEF DESCRIPTION OF THE DRAWINGS:

The invention will now be described with reference to the accompanying drawings.
- **Figure 1**: shows block diagram describing one of the possible mechanisms that can cause a reverse current
- **Figure 2**: shows block diagram for the first embodiment in accordance with the invention.
- **Figure 3**: shows block diagram for the second embodiment in accordance with the invention.
- **Figure 4**: shows block diagram for the third embodiment in accordance with the invention.

### DETAILED DESCRIPTION OF THE INVENTION:

**Figure 1** has already been discussed under the heading background of the invention.

**Figure 2** shows a block diagram for a proffered embodiment in accordance with the present invention. Block **200** is a driving circuit and block **230** is the load. The blocks **210** and **220** together constitute the protection device of the invention. Block **210** is a voltage-monitor, comprising a voltage detecting element **211** receiving input from the driving circuit **200** and providing it to controlling gate **212**. The output of block **210** is connected to switching element **230**. The voltage-detecting element **211** receives input from the driving circuit **200** and enables gate **212** only when the voltage is above a defined threshold limit. Gate **212** enables switching element **230** that enables the driving circuit **200** to drive the load.

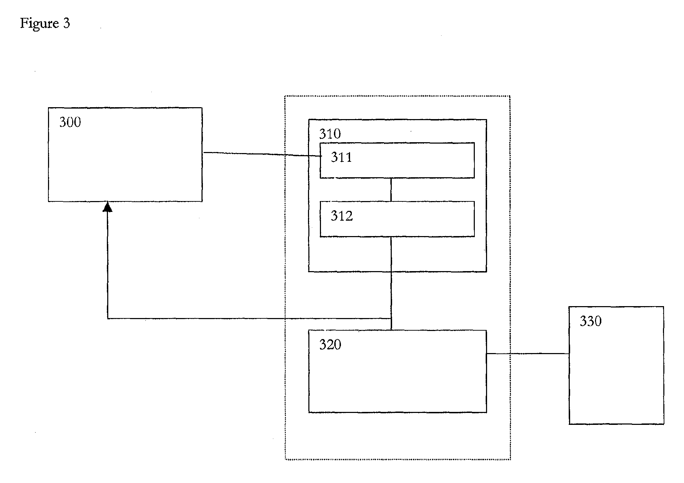

**Figure 3** shows another embodiment of the invention. Block **300** is a general-purpose micro controller. Micro controller **300** is connected to load **330** through the protecting device comprising blocks **310** and **320**. Block **310** contains a voltage threshold detector **311** that provides input to gate **312**. The output of the gate is connected to the switching element **330** and is also provided to the micro controller. The switch is enabled on receipt of the signal from the gate but the signal from the micro controller is passed to the switch **330** only once a predetermined period of time is elapsed after the receipt of signal from the gate **312**. The software residing inside the micro controller for this purpose computes the predetermined time.

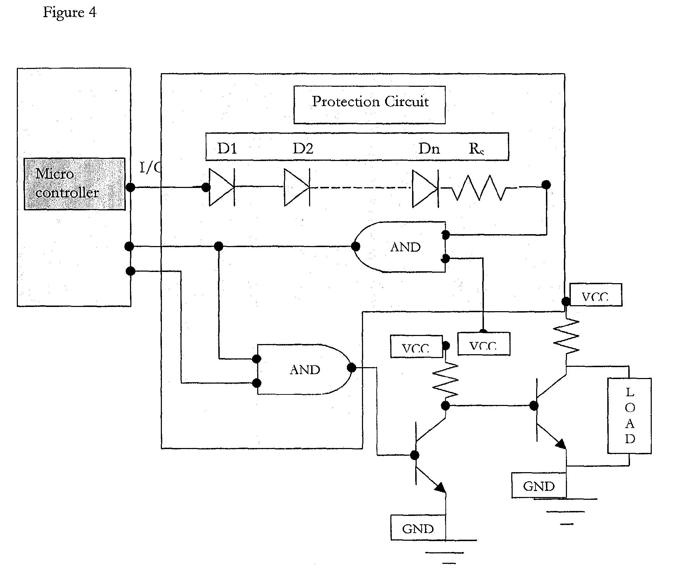

**Figure 4** shows a particular embodiment of the invention wherein the threshold conducting means is realized by a series of diodes and the gate is a simple NAND gate.

The operation of this circuit can be understood as follows. The Micro-controller Unit (MCU) is an ST7 that generates a PWM output to drive the transistor which operates the load. As discussed in the background of the invention, during the power ON, the micro controller suffers from the problem of toggling I/Os when the supply voltage is in the 0.8 - 1.5 volts range. The LVD circuit loses its control over the I/O line and fails to keep the I/O at the RESET level. While the micro controller pin toggles, the MCU can generate a PWM sufficient to drive the transistor. The present invention protects this by not allowing micro controller to drive the transistor when the power supply is transitioning.

The series connected diodes block the micro controller's output signal when until the supply crosses the range of 0.8 - 1.5 volts. The number of diodes that are connected in series are selected according to the voltage levels required.

A software is further provided with the micro controller, that disables the signal from the micro controller before it is passed to the AND gate to drive the load until a predetermined period of time is elapsed after the receipt of the signal from the AND gate. The predetermined time is computed by software residing inside the micro controller for this purpose.

## Claims

1. An electronic protection device that disables the output from a digital circuit whenever an input signal is below a threshold voltage level, comprising:
- a threshold voltage detector, and
- a gating means for enabling/disabling the output from the digital circuit, having its control input connected to the output of the threshold voltage detector.

2. An electronic protection device as claimed in claim 1 wherein said threshold voltage detector comprises a plurality of diodes connected in series.

3. An electronic protection device as claimed in claim 1 wherein said gating means is a controlled switch.

4. An electronic protection device as claimed in claim 1 wherein said threshold voltage sensor is a zener diode or micro controller.

5. An electronic protection device as claimed in claim 1 wherein said digital circuit is a microcontroller.

6. An electronic protection device as claimed in claim 5 wherein said microcontroller includes a mechanism for delaying the digital output for a predefined period after the input signal has attained the defined threshold level.

7. An electronic protection device as claimed in claim 6 wherein said mechanism is a software means.

8. A method for disabling the output from a digital circuit whenever an input signal is below a threshold voltage level, comprising the steps of:
- checking whether the input signal is below a defined threshold voltage, and
- gating the output from the digital circuit, based on the output of the threshold voltage detection.

9. A method as claimed as claimed in claim 9 wherein the threshold voltage is checked using a plurality of series connected diodes.

10. A method as claimed as claimed in claim 9 wherein the gating is implementing using standard logic gates.

11. A method as claimed as claimed in claim 9 further including the step of delaying the digital output for a predefined period after the input signal has attained the defined threshold level.

12. An electronic protection device substantially as herein described with reference to the accompanying drawings.

13. A method for disabling the output from a digital circuit whenever an input signal is below a threshold voltage level substantially as herein described with reference to the accompanying drawings.
